Europäisches Patentamt

European Patent Office

Office européen des brevets

(19)

(11) Publication number: **0 318 128 B1**

(12) **EUROPEAN PATENT SPECIFICATION**

(45) Date of publication of patent specification :
08.01.92 Bulletin 92/02

(51) Int. Cl.⁵ : **B60C 9/20, B60C 11/00**

(21) Application number : 88303588.3

(22) Date of filing : 21.04.88

(54) **Pneumatic radial tyre for heavy loads.**

(30) Priority : 27.11.87 JP 300656/87

(43) Date of publication of application :
31.05.89 Bulletin 89/22

(45) Publication of the grant of the patent :
08.01.92 Bulletin 92/02

(84) Designated Contracting States :
DE FR GB

(56) References cited :
DE-A- 2 644 452
US-A- 4 047 552
US-A- 4 696 335

(73) Proprietor : SUMITOMO RUBBER INDUSTRIES
LIMITED
No. 1-1, Tsutsui-cho 1-chome
Fukiai-ku Kobe-shi Hyogo (JP)

(72) Inventor : Fukumoto, Tetsuhiro
6-8 chome, Suma-ku
Kobe-shi (JP)
Inventor : Ochial, Kiyoshi
4-1-908 Manabigaoka 3-Chome
Tarumi-ku Kobe-shi (JP)
Inventor : Inaoka, Midori
1-4 Sumiecho, Tsuto
Nishinomiya-shi Hyogo-ken (JP)
Inventor : Takeuchi, Akihiro
6-17-23-301 Ryugadai Suma-ku
Kobe-shi Hyogo-ken (JP)

(74) Representative : Stewart, Charles Geoffrey
SP TYRES UK LIMITED Tyre Technical
Division
Fort Dunlop Birmingham B24 9QT (GB)

## Description

The present invention relates to a pneumatic radial tyre for heavy loads, and more particularly to an improved tread reinforcement. In general pneumatic radial tyres for heavy loads such as trucks and buses are so-called steel radial ply tyres. Such tyres comprise a carcass of radially arranged steel cords with the cord ends turned up around bead cores and a belt composed of 3 or 4 belt plies arranged on the crown of the carcass to reinforce the tread region. Recently, structural failures of such tyres in the carcass and the bead region have been reduced by improvements to the carcass and bead structures. Furthermore, the tyres have been used in more and more severe conditions with higher speeds and heavier loads.

In such tyres for heavy loads used under such conditions, the ground contacting pressure is much higher than for passenger car tyres and so-called shoulder wear -- an uneven wear in which the edge parts of the tread are greatly worn by slip thereof against the road surface -- is liable to be caused by the uneven rigidity of the tread and also by the difference between the diameters in the central part and the edge parts of the tread.

Furthermore, due to the heat and strain generated by tyre rotation, so-called tread separation -- a structural failure caused by an adhesion failure between the belt cords and rubber expanding from the belt ends of the third belt ply -- is often liable to occur.

US-A-4696335 shows and describes a radial tyre for heavy loads comprising a carcass (3), extending between beads of the tyre, and having cords arranged at an angle of about 0 degrees with respect to the radial direction of the tyre, a tread and a tread reinforcing belt of first, second, third and fourth metal cord plies arranged radially outwardly in that order the second belt ply having a curvature substantially concentric with the curvature of the radially outer surface of the tread and a width of substantially the tread width ; the third belt ply having a width smaller than the width of the second belt ply and being provided on both ends with end parts being spaced a distance of 2 to 4 mm radially from the second belt ply ; and the third belt ply in a central part having a curvature substantially concentric with the curvature of the radially outer surface of the tread.

It is therefore, an object of the present invention to solve the above-mentioned problems, that is, to prevent shoulder wear and tread separation, without loss of the other required characteristics.

According to the present invention, a pneumatic radial tyre for heavy loads comprises a carcass extending between beads of the tyre, and having cords arranged at an angle of 0 to 30 degrees with respect to the radial direction of the tyre, a tread and a tread reinforcing belt of first, second, third and fourth metal cord plies arranged radially outwardly in that order, the second belt ply having a curvature concentric with the curvature of the radially outer surface of the tread and a width at least 93% of the tread width ; the third belt ply having a width smaller than the width of the second belt ply and being provided on both ends with end parts being spaced a distance of 1.5 to 4.5 mm radially from the second belt ply ; and the third belt ply in a central part having a width 60 to 70% of the width of the third belt ply and both end parts having a width 5 to 15% of the width of the third belt ply each said central part and said end parts having a curvature concentric with the curvature of the radially outer surface of the tread.

Of the four belt plies, the first three plies which are first to third plies outwardly serve as a reinforcement hoop, and the fourth belt ply nearest to the ground contacting surface provides mainly a protection for the first to third plies from external cuts and damage.

Since the second belt ply, which is positioned in the centre of the three belt plies, is formed into a circular arc concentric with the curvature of the radially outer profile of the tread surface over all its width, the second belt ply, when the tread contacts with the ground, becomes parallel to the ground in the section of the tyre, whereby uniformity of the rigidity provided on the tread by the above-mentioned three belt plies with the reinforced hoop effect is improved.

Accordingly, the ground contact pressure under heavy loads is unified and uneven wear of the tread is decreased. Accordingly, the width of the second belt ply should be at least 93% of the tread width under the standard load.

Incidentally, the uniformity is best maintained, if in addition the distance (1) which is the spacing between the tread surface and the second belt ply measured along the normal line from any point on the tread surface to the second belt ply, is in the range of 10 + 1.0 mm, wherein 10 is the distance at the radial centre line (CL).

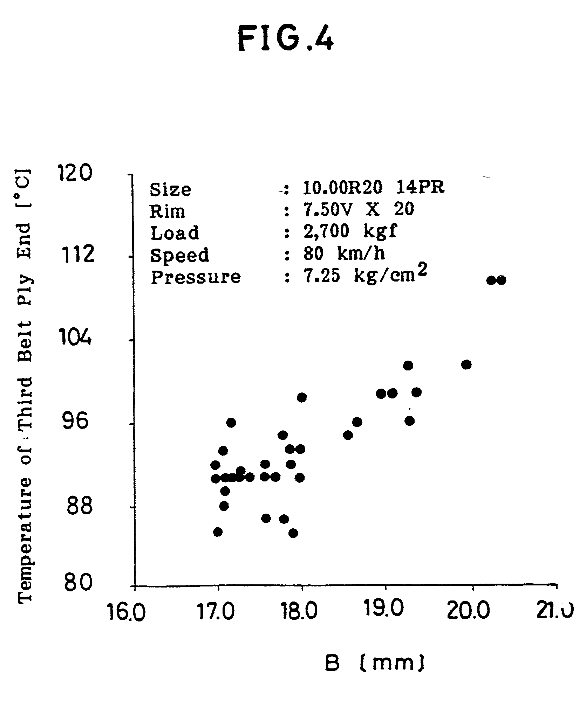

Furthermore, in general the inventors considered that the heat generated in the tread rubber while the tyre is rotated becomes an important cause of tread separation owing to the tendency for heat to cause adhesive failure between the belt cords and the rubber in the belt ends of the third belt ply. They found that the resistance to such tread separation shows a reverse correlation with the temperature of the belt ends of the third belt ply, thus the resistance to tread separation decreases as the temperature increases. Also they found the temperature of the belt ends of the third belt ply shows a positive correlation with the distance (B) thereof from the tread surface, as shown in Fig. 4 which shows the distribution of the temperature when the distance (B) is varied, taking the distance (B) as the abscissa and the temperature at the third belt end as the ordinate.

Thus it was realised that the shorter the distance (B) of the third belt ply ends from the tread surface is, the lower the temperature is, and the more preferable the situation is. However, if the distance (B) is too small, then the belt ply will come to the tread surface early as tread wear occurs, and furthermore the belt ply ends become too remote from the second belt ply and the necessary and above mentioned hoop stiffness effect is decreased.

Thus it was discovered that both end parts of the third belt ply should be at a distance in a range of 1.5 to 4.5 mm from the second belt ply, and must additionally be formed into a circular arc concentric with the outer profile of the tread. If the distance is smaller than 1.5 mm, the distance of the end parts form the tread surface is too large, and the tread has danger of separation due to heat. On the contrary, is the distance is larger than 4.5 mm, there are encountered the problems of the belt ply coming into the ground contact region with even a decrease in the hoop stiffness effect, as described above. The spaced parts of the third belt ply, reduce the interlayer strain which is caused between the ends of the second belt ply and those of the third belt ply, and have a good effect in preventing interlayer separation. Furthermore, as the end parts of the third belt ply are formed into circular arcs each concentric with the curvature of the radially outer profile of the tread, the distribution of the ground contacting pressure becomes uniform, and the stress concentration in the belt ply ends, which was observed in the conventional constructions, disappears. As a result, the durability of the tyre is increased.

An embodiment of the present invention will now be described, by way of example only, with reference to the accompanying drawings, in which :

Fig. 1. is a sectional view showing an embodiment of the present invention

Figs 1(a) and 1(b) are diagrammatic views showing two examples of the belt edge region

Figs. 2 and 3 are bar graphs showing test results :

Fig. 4. is a graph showing the relationship between the temperature of the third belt ply end and its distance from the tread surface ; and

Fig. 5. is a sectional view showing a reference tyre for the tests.

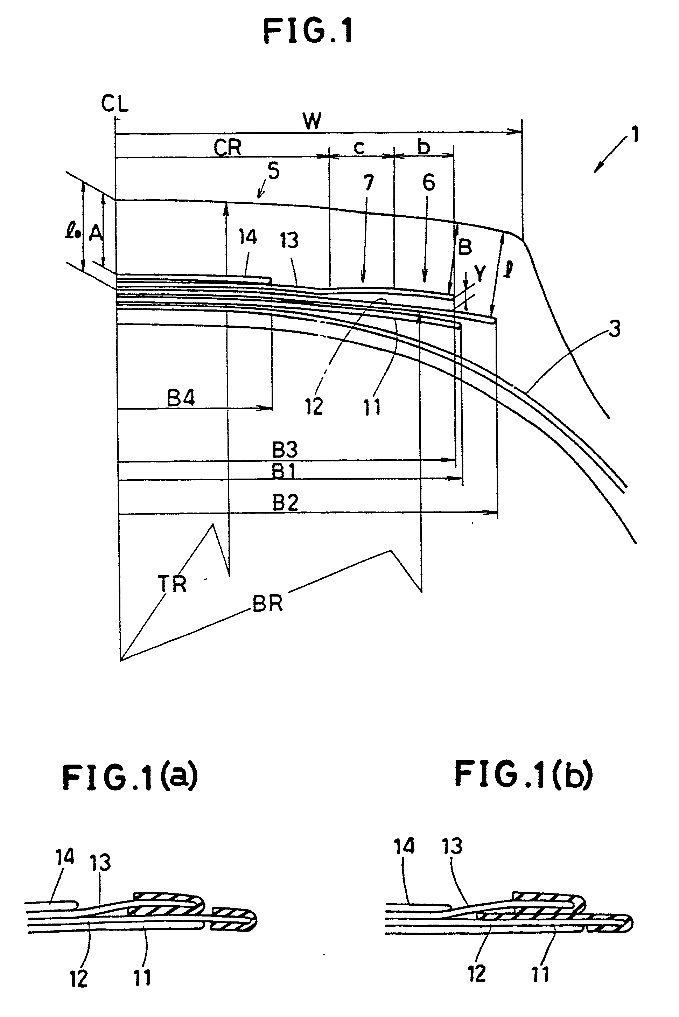

The pneumatic radial tyre for heavy loads of Fig. 1 is provided with first to fourth belt plies 11, 12, 13 and 14 arranged between a carcass 3 and a tread 5 on the crown of the carcass. The carcass 3 is, in both ends, turned up around a pair of bead cores disposed in the tyre beads – not shown and the carcass comprises parallel metallic, organic or glass cords, in this example metal cords, arranged at an angle of 0 to 30 degrees to the radial direction of the tyre.

The surface of the tread 5 is formed into an arc of a circle having a centre on the centre line (CL) of the tyre, and the reference (TR) and (W) refer to the radius of the curvature and the width of the tread respectively.

The cords of the first to fourth belt plies 11 to 14 are arranged at an angle of 10 to 70 degrees with respect to the equatorial plane of the tyre so that the first belt ply cords and the second belt ply cords are laid in one direction to the centreline and the third belt ply cords and the fourth belt ply cords are laid in a direction crosswise to the above-mentioned direction of the first and second belt ply cords. Each belt ply of this example is composed of steel cords, and the second belt ply 12 is widest and has a width (B2).

The second belt ply 12 is formed is cross section as an arc of a circle concentric with the tread surface, and the radius (BR) of the curvature therefore is slightly less than the radius (TR) of the curvature of the tread surface.

The distance (1) between the tread surface and the second belt ply 12 along the normal line from any point on the tread surface to the second belt ply is almost constant and is in a range of 10 + 1.0 mm, wherein 10 is the distance between the tread surface and the second belt ply at the centre line (CL). Accordingly, a relation: BR = TR – 10 comes into existence, and in a section of the tyre in contact with the ground, the second belt ply 12 is parallel to the road surface over the about whole width thereof.

The width (B2) of the second belt ply 12 is more than 93% of the tread width (W) when the tyre is subjected to the standard or design load, so that the tread is increased in rigidity over substantially its whole width. If the width (B2) is less than 93% of the tread width, the rigidity is decreased in the shoulder parts, and uneven wear is apt to be caused.

The first belt ply II is disposed close to the radially inner side of the second belt ply 12 so as to also be parallel to the tread surface. The width (B1) thereof is less than the width (B2) of the second belt ply 12 being in this example about 20 mm smaller.

The third belt ply 13 is disposed radially outside the second belt ply 12, and the width (B3) thereof is about the same as the width (B1). The third belt ply 13 is provided in both its ends with spaced parts 6 a distance (Y) spaced from the second belt ply (12). As mentioned above, the distance (Y) is in the range of 1.5 to 4.5 mm.

*Each spaced part 6, has a width (b) of 5 to 15% of the width of the third belt ply and is formed so as to be parallel to the second belt ply 12 that is, parallel with the tread surface.*

The third belt ply is provided with slanting parts 7 where the distance from the second belt ply gradually decreases towards the axially inside of the tyre.

Thus as a result stress concentration and the occurrence of a gap in the rigidity are effectively prevented. And further, since the curvature of each end part of the third belt ply is concentric with the curvature of the tread surface, the ground pressure when the tyre is loaded is equalised even in the belt end parts, and there is prevented the stress concentration on the belt end parts of prior art tyres. Accordingly, the durability of the tyre is increased and tread wear is equalised across the tread.

The fourth belt ply 14 is disposed radially outside and parallel to the third belt ply 13 and is positioned between the spaced parts 6, in this example between the slanting parts 7. The width (B4) of the fourth belt ply 14 is the following relation :

$$B4 \leq B3 - 2(b + c)$$

wherein c is the width of the slanting part 7.

Further, the fourth belt ply 14 is positioned so that the distance (A) of the fourth belt ply 14 from the tread surface equals the distance (B) of the spaced part 6 form the tread surface.

The end parts of the second belt ply 12 and the above-mentioned end parts of the third ply 13 are covered by rubber strips as shown in Figs. 1(a) and (b). By this means, the resistance to cord separation is further increased, and the positioned precision of each belt ply in the axial direction and the dimensional precision of the spaced part 6 also increase.

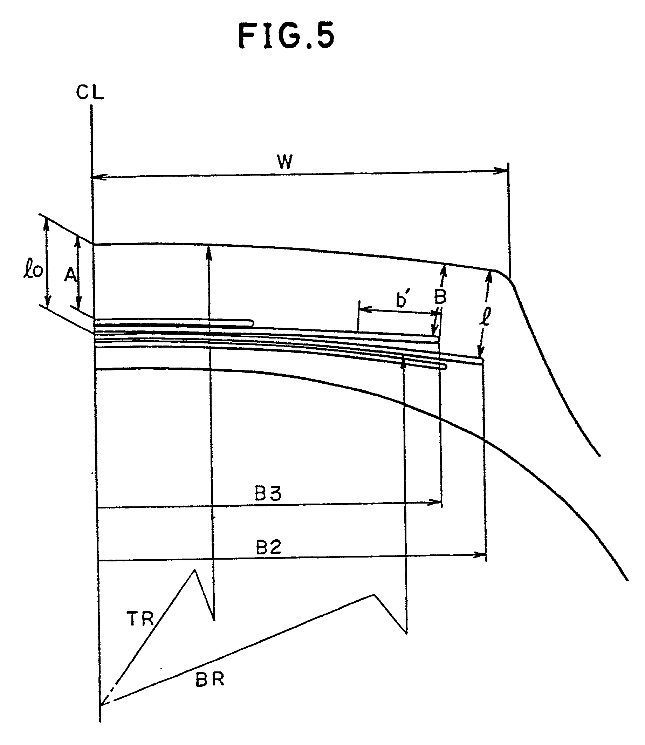

Some test results will now be given to show the value of the invention. Various five rib pattern test tyres of 10.00R20 14PR were made including example tyres according to the invention shown in Fig. 1 and Table 1 and reference tyres as shown in Fig. 5 and Table 1.

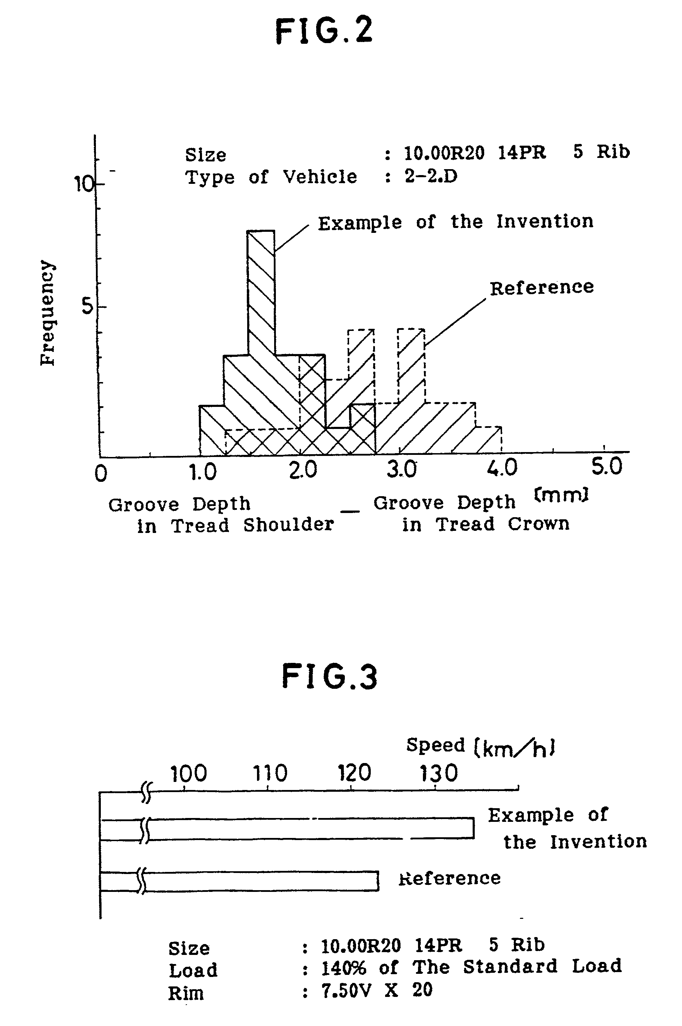

The difference between the depth of the grooves remaining in the tread crown and that in the tread shoulders after running the test tyres were evaluated by a field test by truck users. The results are shown in Fig. 2 in which the abscissa and the ordinate thereof are for the difference and the frequency, respectively. The trucks used for the field test were of a 2-2.D type and ran mostly on expressways with loads of general commodities.

## Table 1

| Dimension (mm) | Example Fig.1 | Reference Fig.5 |
|---|---|---|
| A | 17.9 | 17.9 |
| B | 17.9 | 17.9 |
| B2 | 182 | 182 |
| B3 | 162 | 162 |
| BR | 479 | 479 |
| TR | 500 | 500 |
| W | 194 | 194 |
| lo | 21.5 | 21.5 |
| l | 21.5 | 21.5 |
| Y | 2.5 | *¹ |
| b | 20 | *¹ |

Note 1: In the reference tyre of Fig.5, a second belt ply has curvature concentric with curvature of a radially outer surface of a tread, and each end part (b) of a third belt ply did not have curvature with the curvature of the radially outer surface of the tread.

In Fig. 2, the abscissa is correspond to the uniformity in tread wear in end of tyre life, the smaller the value, the better the resistance to wear. As apparent from Fig. 2, in the tyre according to present invention, uneven wear was remarkably reduced.

Fig. 3 shows the results of an indoor drum test for durability on the same tyres as described above wherein the test tyres were subjected to a 140% load of the standard load and continuously run on a smooth drum with increasing running speed to reproduce tread separation failure by generated heat. The durability of the tyre is evaluated by the speed at which tread separation failure occurred.

Also in this durability test, the tyre according to the present invention is considerably superior to the reference tyre.

As described above, the pneumatic radial tyre for heavy loads according to the present invention has the second belt ply arranged parallel to the tread surface and the third belt ply provided in both the end parts with spaced parts which are, in section, concentric with the tread surface, whereby the rigidity of the tread becomes uniform, and the occurrence of uneven wear is substantially reduced.

Furthermore, as the spaced parts are covered with rubber, the stress concentration on the adjacent belt ply ends is reduced so that resistance to ply separation increases and structural failure thereby is diminished.

## Claims

1. A radial tyre for heavy loads comprising a carcass (3), extending between beads of the tyre, and having cords arranged at an angle of 0 to 30 degrees with respect to the radial direction of the tyre, a tread (5) and a tread reinforcing belt of first, second, third and fourth metal cord plies (11, 12, 13, 14) arranged radially outwardly in that order, the second belt ply (12) having a curvature concentric with the curvature of the radially outer surface of the tread (5) and a width (B2) at least 93% of the tread width (W) ; the third belt ply (13) having a width (B3) smaller than the width (B2) of the second belt ply (12) and being provided on both ends with end parts (6) being spaced a distance (Y) of 1.5 to 4.5 mm radially from the second belt ply (12) ; and the third belt ply (13) in a central part having a width (CR) 60 to 70% of the width (B3) of the third belt ply (13) and both end parts (6) having a width (b) 5 to 15% of the width (B3) of the third belt ply (13), each said central part and said end parts (6) having a curvature concentric with the curvature of the radially outer surface of the tread (5).

2. A radial tyre according to claim 2 characterised by rubber covering layers covering the edges of the second belt ply (12) and/or the edges of the third belt ply (13) and providing the distance (Y) between the spaced end parts (6) of the third belt ply (13) and the second belt ply (12).

3. A radial tyre according to claim 1 or 2 characterised by the third belt ply (13) being provided between its central part and its end parts (6) with slanting parts (7) the distance of which from the second belt ply (12) gradually decreases towards the axially inner central part thereof.

4. A radial tyre according to any of claims 1 to 3 characterised in that the cords of the carcass are composed of metal, organic or glass fibres.

5. A radial tyre according to any of claims 1, 2, 3 or 4 characterised in that the fourth belt ply (4) is disposed on the third belt ply (13) and between the end parts (6) thereof with respect to the axial direction of the tyre.

6. A radial tyre according to claim 5 characterised in that the distance (A) of the fourth belt ply (14) from the radially outer surface of the tread (5) is substantially equal to the distance (B) of the end parts (6) of the third belt ply (13) from the radially outer surface of the tread (5).

## Patentansprüche

1. Radialreifen für Schwerbelastung, welcher umfaßt eine Karkasse (3), die sich zwischen Wulsten des Reifens erstreckt und mit einem Winkel von 0 bis 30° bezüglich der Radialrichtung des Reifens angeordnete Korde besitzt, einen Laufstreifen (5) und einen Laufstreifen-Verstärkungsgürtel aus ersten, zweiten, dritten und vierten Metallkordlagen (11, 12, 13, 14), die radial nach außen in dieser Reihenfolge angeordnet sind, wobei die zweite Gürtellage (12) eine zur Krümmung der radial äußeren Fläche des Laufstreifens (5) konzentrische Krümmung besitzt und eine Breite (B2) von mindestens 93% der Laufstreifenbreite (W) ; die dritte Gürtellage (13) eine Breite (B3) besitzt, die geringer ist als die Breite (B2) der zweiten Gürtellage (12) und an beiden Enden mit Endteilen (6) versehen ist, die einen radialen Abstand (Y) von 1,5 bis 4,5 mm von der zweiten Gürtellage (12) besitzen, und die dritte Gürtellage (13) in einem zentralen Teil eine Breite (CR) von 60 bis 70% der Breite (B3) der dritten Gürtellage (13) und beide Endteile (6) mit einer Breite (b) von 5 bis 15% der Breite (B3) der dritten Gürtellage (13) besitzt, wobei jeweils der zentrale Teil und die Endteile (6) eine mit der Krümmung der radial äußeren Fläche des Laufstreifens (5) konzentrische Krümmung besitzen.

2. Radialreifen nach Anspruch 1, gekennzeichnet durch Gummideckschichten, die die Kanten der zweiten Gürtellage (12) und/oder die Kanten der dritten Gürtellage (13) überdekken und den Abstand (Y) zwischen den voneinander getrennten Endteilen (6) der dritten Gürtellage (13) und der zweiten Gürtellage (12) schaffen.

3. Radialreifen nach Anspruch 1 oder 2, dadurch gekennzeichnet, daß die dritte Gürtellage (13) zwischen ihrem zentralen Teil und ihren Endteilen (6) mit geneigten Teilen (7) versehen ist, deren Abstand von der zweiten Gürtellage (12) zu dem axial inneren zentralen Teil derselben allmählich abnimmt.

4. Radialreifen nach einem der Ansprüche 1 bis 3, dadurch gekennzeichnet, daß die Korde der Karkasse aus metallischen oder organischen Fasern oder aus Glasfasern zusammengesetzt sind.

5. Radialreifen nach einem der Ansprüche 1, 2, 3 oder 4, dadurch gekennzeichnet, daß die vierte Gürtellage (4) auf der dritten Gürtellage (13) und zwischen deren Endteilen (6) bezüglich der Axialrichtung des Reifens angeordnet ist.

6. Radialreifen nach Anspruch 5, dadurch gekennzeichnet, daß der Abstand (A) der vierten Gürtellage (14) von der radial äußeren Fläche des Laufstreifens (5) wesentlich gleich dem Abstand (B) der Endteile (6) der dritten Gürtellage (13) von der radial äußeren Fläche des Laufstreifens (5) ist.

## Revendications

1. Pneumatique à carcasse radiale pour lourdes charges, comprenant une carcasse (3) disposée entre des talons du pneumatique et ayant des câblés faisant un angle compris entre 0 et 30° avec la direction radiale du pneumatique, une bande de roulement (5) et une ceinture de renforcement de la bande de roulement comprenant une première, une seconde, une troisième et une quatrième nappe (11, 12, 13, 14) de câblés métalliques disposées radialement vers l'extérieur dans cet ordre, la seconde nappe (12) de ceinture ayant une courbure concentrique à la courbure de la surface radialement externe de la bande de roulement (5) et une largeur (B2) au moins égale à 93% de la largeur (W) de la bande de roulement, la troisième nappe (13) de ceinture ayant une largeur (B3) inférieure à la largeur (B2) de la seconde nappe (12) de ceinture et étant munie aux deux extrémités de parties (6) d'extrémité qui sont séparées par une distance (Y) de 1,5 à 4,5 mm radialement par rapport à la seconde nappe (12) de ceinture, et la troisième nappe (13) de ceinture, dans une partie centrale, ayant une largeur (CR) comprise entre 60 et 70% de la largeur (B3) de la troisième nappe (13) de ceinture et deux parties d'extrémité (6) ayant une largeur (b) comprise entre 5 et 15% de la largeur (B3) de la troisième nappe (13) de ceinture, la partie centrale et les parties d'extrémité (6) ayant une courbure concentrique à la courbure de la surface radialement externe de la bande de roulement (5).

2. Pneumatique à carcasse radiale selon la revendication 2, caractérisé par des couches de revêtement de caoutchouc qui recouvrent les bords de la seconde nappe (12) de ceinture et/ou les bords de la troisième nappe (13) de ceinture et donnant la distance (Y) entre les parties distantes d'extrémité (6) de la troisième nappe (13) et de la seconde nappe (12) de ceinture.

3. Pneumatique à carcasse radiale selon la revendication 1 ou 2, caractérisé en ce que la troisième nappe (13) de ceinture comporte, entre sa partie centrale et ses parties d'extrémité (6), les parties inclinées (7) dont la distance à la seconde nappe (12) de ceinture diminue progressivement vers la partie centrale axialement interne.

4. Pneumatique à carcasse radiale selon l'une quelconque des revendications 1 à 3, caractérisé en ce que les câblés de la carcasse sont composés de fibres métalliques, organiques ou de verre.

5. Pneumatique à carcasse radiale selon l'une quelconque des revendications 1, 2, 3 et 4, caractérisé en ce que la quatrième nappe (4) de ceinture est placée sur la troisième nappe (13) de ceinture et entre ses parties d'extrémité (6), dans la direction axiale du pneumatique.

6. Pneumatique à carcasse radiale selon la revendication 5, caractérisée en ce que la distance (A) de la quatrième nappe (14) de ceinture à la surface radialement externe de la bande de roulement (5) est pratiquement égale à la distance (B) des parties d'extrémité (6) de la troisième nappe (13) de ceinture à la surface radialement externe de la bande de roulement (5).

# FIG.1

# FIG.1(a)          FIG.1(b)

# FIG.2

Size : 10.00R20 14PR 5 Rib
Type of Vehicle : 2-2.D

Frequency

Example of the Invention

Reference

Groove Depth — Groove Depth [mm]
in Tread Shoulder in Tread Crown

# FIG.3

Speed [km/h]

Example of
the Invention

Reference

Size : 10.00R20 14PR 5 Rib
Load : 140% of The Standard Load
Rim : 7.50V X 20

# FIG.4

Size     : 10.00R20 14PR
Rim      : 7.50V X 20
Load     : 2,700 kgf
Speed    : 80 km/h
Pressure : 7.25 kg/cm$^2$

Temperature of Third Belt Ply End [°C]

B (mm)

# FIG.5